**Europäisches Patentamt**

**European Patent Office**

**Office européen des brevets**

(19)

(11) Veröffentlichungsnummer: **0 184 665 B1**

(12) **EUROPÄISCHE PATENTSCHRIFT**

(45) Veröffentlichungstag der Patentschrift:
**01.06.88**

(51) Int. Cl.⁴: **H 01 B 1/08**

(21) Anmeldenummer: **85114105.1**

(22) Anmeldetag: **06.11.85**

(54) **Elektrisch leitfähige Keramik.**

(30) Priorität: **12.12.84 DE 3445251**

(43) Veröffentlichungstag der Anmeldung:
**18.06.86 Patentblatt 86/25**

(45) Bekanntmachung des Hinweises auf die Patenterteilung:
**01.06.88 Patentblatt 88/22**

(84) Benannte Vertragsstaaten:
**CH FR GB LI**

(56) Entgegenhaltungen:
**GB - A - 2 002 739**

(73) Patentinhaber: **DORNIER SYSTEM GmbH, Postfach 1360, D-7990 Friedrichshafen (DE)**

(72) Erfinder: **Kock, Wulf, Dr., Azenbergstrasse 7, D-7778 Markdorf (DE)**

(74) Vertreter: **Landsmann, Ralf, Dipl.-Ing., Kleeweg 3, D-7990 Friedrichshafen 1 (DE)**

## Beschreibung

Die Erfindung betrifft eine elektrisch leitfähige Keramik, die unter korrosiven oder oxidierenden Bedingungen und bei hohen Temperaturen um 1300°C verwendet werden kann.

Bei der Hochtemperatur-Dampfphasenelektrolyse oder beim Betreiben von Hochtemperatur-Brennstoffzellen sind niederohmige Elektroden mit geringem Übergangswiderstand zum Elektrolyten erforderlich, die diese Eigenschaften in oxidierender Umgebung und bei hohen Temperaturen behalten.

Neben der Widerstandsfähigkeit gegen hohe Temperaturen und oxidierende Gase soll der Kontaktierungswerkstoff möglichst gut leiten, billig sein, thermische Wechselbelastung aushalten und keine hochohmige Deckschicht ausbilden, da nur relative niedrige Spannungen abzugreifen sind.

Edelmetalle erfüllen praktisch alle dieser Anforderungen, sind jedoch für eine breite Anwendung zu teuer.

Bekannte gut leitende Keramiken wie Molybdänsilizid oder Siliziumcarbid bilden unter oxidierenden Bedingungen genau wie Heizleiterlegierungen hochohmige Deckschichten aus. Besonders für Kontaktierungsaufgaben in Systemen mit geringem Spannungsabfall sind hohe Kontaktwiderstände prohibitiv.

Als preiswerte Alternative zu den Edelmetallen, wenn auch mit deutlich verringerter Leitfähigkeit, bieten sich leitfähige Oxidkeramiken an. Ihr Einsatz ist besonders dann vorteilhaft, wenn im konstruktiven Verbund mit anderen Keramiken angepasste thermische Ausdehnungskoeffizienten erforderlich sind. Bekannte Vetreter solch leitfähiger Keramiken sind Mischoxide, die im Perowskitgitter kristallisieren und auf ein Kationenuntergitter (B-Gitter) ein Übergangsmetall in zwei verschiedene Wertigkeitsstufen eingebaut haben. Hohe Leitfähigkeiten sind aus den quasibinären Systemen $LaMnO_3$-$CaMnO_3$, $LaCoO_3$-$SrCoO_3$, $LaCrO_3$-$LaNiO_3$ oder $LaNiO_3$-$CaNiO_3$ bekannt.

Aus der DE-A-2 735 934 ist bekannt, dass Stoffe der Zusammensetzung $La_x Ca_{1-x} MnO_{3(+\Delta)}$ gute Leitfähigkeiten aufweisen. Die Grösse von $\Delta$ stellt sich bei vorgegebener Zusammensetzung der Kationen als Funktion des Sauerstoff partialdruckes und der Temperatur ein und variiert je nach Umgebungsbedingungen zwischen etwa $-0,25$ und $+0,25$.

Der Erfindung liegt die Aufgabe zugrunde, eine Oxidkeramik anzugeben, die eine höhere Leitfähigkeit als die bekannten Keramiken besitzt und die die folgenden Anforderungen erfüllt:

— Widerstandsfähigkeit gegen hohe Temperaturen,
— Widerstandsfähigkeit gegen oxidierende Gase,
— Wechselbeständigkeit gegen hohe Temperaturschwankungen,
— keine Ausbildung einer hochohmigen Deckschicht,
— Preisgünstigkeit.

Diese Aufgabe wird erfindungsgemäss gelöst von einer Keramik mit der im Anspruch 1 angegebenen Zusammensetzung.

Ausführungsformen der Erfindung sind Gegenstände der Unteransprüche.

Neu an den erfindungsgemässen Stoffen ist, dass das A-Gitter (La, Ca) nicht voll besetzt ist. Überraschend wurde gefunden, dass bei dem erfindungsgemäss nicht stöchiometrischen (nicht-äquimolaren) Verhältnis A/B eine erhöhte Leitfähigkeit auftritt, obwohl die Leitfähigkeit dieser Stoffe vom Übergangsmetall (B-Gitter), welches hier zwischen 3- und 4-wertig wechselt, verursacht wird.

Das erfindungsgemässe Material erfüllt alle in der Aufgabe genannten Anforderungen. Zusätzlich ist es im Ausdehungskoeffizienten an die anderen Keramiken angepasst und leitet auch bei Zimmertemperatur.

Die nachstehende Tabelle gibt in den ersten vier Zeilen die Zusammensetzung von vier verschiedenen erfindungsgemässen Keramiken, ihr Verhältnis der Untergittermolzahlen A/B — wobei A die Summe der Molzahlen von La und Ca ist und B die Molzahl des Mangans — und die spezifische Leitfähigkeit $\sigma$ bei 1000°C an Luft an. Zum Vergleich sind drei weitere Zusammensetzungen angegeben, die nicht das erfindungagemässe Verhältnis A/B kleiner 1 aufweisen und die eine deutlich niedrigere Leitfähigkeit besitzen.

### TABELLE 1

| Zusammensetzung | A/B | $\sigma/\Omega^{-1} \cdot cm^{-1}$ |
| --- | --- | --- |
| $La_{0,44} Ca_{0,42} MnO_{3+\Delta}$ | 0,86 | 260 |
| $La_{0,46} Ca_{0,43} MnO_{3+\Delta}$ | 0,89 | 290 |
| $La_{0,48} Ca_{0,43} MnO_{3+\Delta}$ | 0,91 | 265 |
| $La_{0,46} Ca_{0,50} MnO_{3+\Delta}$ | 0,96 | 267 |
| $La_{0,56} Ca_{0,50} MnO_{3+\Delta}$ | 1,06 | 180 |
| $La_{0,52} Ca_{0,59} MnO_{3+\Delta}$ | 1,11 | 128 |
| $La_{0,66} Ca_{0,46} MnO_{3+\Delta}$ | 1,12 | 122 |

## Patentansprüche

1. Elektrisch leitfähige Keramik der Zusammensetzung $La_xCa_yMnO_{3+\Delta}$, dadurch gekennzeichnet, dass x = 0,44 bis 0,48, y = 0,42 bis 0,50 ist und die Summe A der Molzahlen von Lanthan und Calcium 1 bis 15% kleiner ist als die Molzahl B des Mangans.

2. Elektrisch leitfähige Keramik nach Anspruch 1, dadurch gekennzeichnet, dass die Summe A der Molzahlen von Lanthan und Calcium zwischen 8 und 12% kleiner ist als die Molzahl B des Mangans.

3. Elektrisch leitfähige Keramik nach Anspruch 1, dadurch gekennzeichnet, dass die Summe A der Molzahlen von Lanthan und Calcium um 10% kleiner ist als die Molzahl B des Mangans.

## Revendications

1. Céramique électriquement conductrice de

composition $La_xCa_yMnO_{3+\Delta}$, caractérisée en ce que x = 0,44 à 0,48, y = 0,42 à 0,50 et que la somme A des indices molaires de lanthane et de calcium est inférieure de 1 à 15% à l'indice molaire B du manganèse.

2. Céramique électriquement conductrice selon la revendication 1, caractérisée en ce que la somme A des indices molaires de lanthane et de calcium est inférieure de 8 à 12% à l'indice molaire B du manganèse.

3. Céramique électriquement conductrice selon la revendication 1, caractérisée en ce que la somme A des indices molaires de lanthane et de calcium est inférieure de 10% à l'indice molaire B du manganèse.

## Claims

1. Electrically conductive ceramic material with the composition $La_xCa_yMnO_{3+\Delta}$, characterised in that x = 0.44 to 0.48, y = 0.42 to 0.50 and the sum A of the mole numbers of lanthanum and calcium is 1 to 15% smaller than the mole number B of the manganese.

2. Electrically conductive ceramic material according to claim 1, characterised in that the sum A of the mole numbers of lanthanum and calcium is between 8 and 12% smaller than the mole number B of the manganese.

3. Electrically conductive ceramic material according to claim 1, characterised in that the sum A of the mole numbers of lanthanum and calcium is 10% smaller than the mole number B of the manganese.